# EUROPEAN PATENT APPLICATION

(11) **EP 3 951 419 A1**
(43) Date of publication of application: **09.02.2022**
(21) Application number: 20189603.2
(22) Date of filing: 05.08.2020
(51) Int. Cl.: G01S 5/02, G01S 5/00

(54) **APPARATUS COMPRISING AT LEAST ONE PROCESSOR**

(71) Applicant: Nokia Technologies Oy, 02610 Espoo (FI)
(72) Inventor: MICHALOPOULOS, Diomidis, 81541 Munich (DE); KIRMAZ, Anil, 81541 Munich (DE); BALAN, Irina-Mihaela, 81549 Munich (DE)
(74) Representative: Nokia EPO representatives

(57) **Abstract**

An apparatus, comprising at least one processor, and at least one memory storing instructions, the at least one memory and the instructions configured to, with the at least one processor, cause a user equipment to perform a location estimation of a location of the user equipment based on a first fingerprint dictionary comprising a plurality of fingerprints, each of the plurality of fingerprints characterizing a location and one or more physical parameters associated with the location, and to trigger a sanity check for validating the location estimation based on the first fingerprint dictionary.

## Description

### Field of the Disclosure

Various example embodiments relate to an apparatus comprising at least one processor.

Further embodiments relate to a method of operating related to such apparatus.

### Background

Fingerprinting-based positioning methods may be used for estimating a location of e.g. a mobile device such as e.g. a user equipment, UE, e.g. for a wireless communications system. Fingerprints may e.g. comprise or be composed of any kind of position related/dependent parameters, e.g. measured entities, such as radio frequency, RF, signals, magnetic field readings, ultrasound signals etc.

Fingerprinting-based positioning may comprise two phases: A training phase, which involves measuring the signal or sensor values, which construct fingerprints, originating from various sources at given known locations (possibly explicitly known or inferable by using side information), also known as reference points (sometimes also referred to as reference locations or reference positions). Then, the measured values together with the corresponding locations may be stored in a fingerprint dictionary. The fingerprint dictionary thus consists of a set of measured signal or sensor values across one or more measurements per point/area of interest and the corresponding locations.

A mapping phase is used for estimating an unknown location of a mobile device, e.g. a target UE. This is accomplished by processing the measured signal or sensor values across one or more sources and correlating such set of measured values with the fingerprint dictionary in order to obtain an estimate of the UE's location.

### Summary

Various embodiments of the disclosure are set out by the independent claims. The exemplary embodiments and features, if any, described in this specification, that do not fall under the scope of the independent claims, are to be interpreted as examples useful for understanding various exemplary embodiments of the disclosure.

Some embodiments relate to an apparatus, comprising at least one processor, and at least one memory storing instructions, the at least one memory and the instructions configured to, with the at least one processor, cause a user equipment to perform a location estimation of a location of the user equipment based on a first fingerprint dictionary comprising a plurality of fingerprints, each of the plurality of fingerprints characterizing a location and one or more physical parameters associated with the location, and to trigger a sanity check for validating the location estimation based on the first fingerprint dictionary.

According to some embodiments, the sanity check comprises a further location determining and/or tracking method, which is different from the location estimation based on the first fingerprint dictionary.

According to some embodiments, the instructions, when executed by the at least one processor, further cause the user equipment to a) perform the sanity check and/or to b) instruct a further entity to perform the sanity check.

According to some embodiments, the instructions, when executed by the at least one processor, further cause the user equipment to: a) transmit an estimated location obtained by the location estimation to the further entity, b) transmit measurements and/or other positioning-related information of the user equipment for the sanity check to the further entity.

According to some embodiments, the instructions, when executed by the at least one processor, further cause the user equipment to: a) receive a warning message characterizing a quality of the location estimation, b) at least temporarily disregard the location estimation, for example based on a or the warning message characterizing a quality of the location estimation and/or on an error report of a or the further entity, c) receive a second fingerprint dictionary, d) receive a command to create a new fingerprint dictionary.

According to some embodiments, the instructions, when executed by the at least one processor, further cause the user equipment to: a) exchange via a sidelink to at least one further user equipment first information characterizing a potential mismatch of the location estimation, e.g. between the fingerprint dictionary-based location estimation and the further location determining and/or tracking method, b) based on at least one of the sanity check and the first information, send a mismatch report, for example to a or the further entity.

According to some embodiments, the instructions, when executed by the at least one processor, further cause the user equipment to: a) perform an update of the first fingerprint dictionary and/or at least one further fingerprint dictionary, b) send an updated fingerprint dictionary, for example to at least one further user equipment, for example via a sidelink, c) send a command to create a new fingerprint dictionary to at least one further user equipment, for example via a sidelink, selectively use one of a plurality of fingerprint dictionaries.

According to some embodiments, performing an update of an existing fingerprint dictionary may comprise replacing the existing fingerprint dictionary with another fingerprint dictionary. This way, for example, different fingerprint dictionaries may be used for different scenarios, wherein updating the existing fingerprint dictionary, which may be associated with a first scenario, may e.g. comprise replacing the existing fingerprint dictionary with another fingerprint dictionary, which may be associated with a further, e.g. second, scenario.

According to further embodiments, performing an update of the existing fingerprint dictionary may comprise modifying the content of the existing fingerprint dictionary. As an example, according to some embodiments, modifying the content of the existing fingerprint dictionary may comprise at least one of adding new characteristics and/or reference points and/or different parameter and/or measurement values and/or other positioning-related information to it.

Further embodiments relate to a method comprising: performing a location estimation of a location of a user equipment based on a first fingerprint dictionary comprising a plurality of fingerprints, each of the plurality of fingerprints characterizing a location and one or more physical parameters associated with the location, and triggering a sanity check for validating the location estimation based on the first fingerprint dictionary.

Further embodiments relate to an apparatus comprising means for causing a user equipment to perform a location estimation of a location of the user equipment based on a first fingerprint dictionary comprising a plurality of fingerprints, each of the plurality of fingerprints characterizing a location and one or more physical parameters associated with the location, and to trigger a sanity check for validating the location estimation based on the first fingerprint dictionary.

Further embodiments relate to an apparatus, comprising at least one processor, and at least one memory storing instructions, the at least one memory and the instructions configured to, with the at least one processor, cause an entity, which is for example associated with a location management function, LMF, to: perform a sanity check for validating a location estimation of a location of a user equipment based on a first fingerprint dictionary comprising a plurality of fingerprints, each of the plurality of fingerprints characterizing a location and one or more physical parameters associated with the location. According to some embodiments, the physical parameters may e.g. comprise at least one measured signal and/or sensor values or the like, such as radio frequency, RF, signals, magnetic field readings, ultrasound signals, camera view, radar signals.

According to some embodiments, the instructions, when executed by the at least one processor, further cause the entity to receive first data from the user equipment, and to perform the sanity check based on the first data, wherein the first data comprise at least one of: a) a location estimation of the user equipment, b) measurements and/or other positioning-related information of the user equipment for the sanity check.

According to some embodiments, the instructions, when executed by the at least one processor, further cause the entity to perform a location estimation of a location of the user equipment based on a fingerprint dictionary comprising a plurality of fingerprints, each of the plurality of fingerprints characterizing a location and one or more physical parameters associated with the location and a further location determining and/or tracking method, which is different from the location estimation based on the first fingerprint dictionary.

According to some embodiments, the instructions, when executed by the at least one processor, further cause the entity to perform at least one of: a) transmitting a warning message characterizing a quality of the location estimation to the user equipment, b) requesting from at least one further user equipment within a predetermined maximum range (e.g., distance) and/or radio range (e.g., corresponding with different propagation/blockage/fading environments) from the user equipment a location estimation of a location of the user equipment and measurements and/or other positioning-related information of the at least one further user equipment for a sanity check and/or receiving the requested location estimation of the location of the user equipment and the requested measurements of the at least one further user equipment, c) a further sanity check based on the requested location estimation of the location of the user equipment and the requested measurements of the at least one further user equipment, d) selectively use one of a plurality of fingerprint dictionaries, e) update at least the first fingerprint dictionary based on the further sanity check and/or based on a comparison of location estimations according to different methods, f) transmit an updated fingerprint dictionary to at least one user equipment, g) trigger a creation of at least one new fingerprint dictionary, h) store multiple fingerprint dictionaries, wherein for example each of the multiple fingerprint dictionaries corresponds to a different scenario.

Further embodiments relate to a method comprising: performing a sanity check for validating a location estimation of a location of a user equipment based on a first fingerprint dictionary comprising a plurality of fingerprints, each of the plurality of fingerprints characterizing a location and one or more physical parameters associated with the location. According to some embodiments, the sanity check comprises a further location determining and/or tracking method, which is different from the location estimation based on the first fingerprint dictionary.

Further embodiments relate to an apparatus comprising means for causing an entity to perform a sanity check for validating a location estimation of a location of a user equipment based on a first fingerprint dictionary comprising a plurality of fingerprints, each of the plurality of fingerprints characterizing a location and one or more physical parameters associated with the location.

Some embodiments relate to a communications system comprising at least one apparatus according to the embodiments and, optionally, at least one UE.

Some embodiments relate to a use of the apparatus according to the embodiments and/or of the method according to the embodiments and/or of the system according to the embodiments for at least one of: a) validating the location estimation based on the first fingerprint dictionary, b) improving a precision of location estimation based on fingerprint dictionaries, c) selectively using one of a plurality of, for example, different fingerprint dictionaries.

### Brief description of the figures

Fig. 1A schematically depicts a simplified block diagram of an apparatus according to some embodiments,
Fig. 1B schematically depicts a simplified block diagram of an apparatus according to some embodiments,
Fig. 2 schematically depicts a simplified block diagram according to some embodiments,
Fig. 3 schematically depicts a simplified block diagram of a fingerprint dictionary according to some embodiments,
Fig. 4A schematically depicts a simplified flow chart according to some embodiments,
Fig. 4B schematically depicts a simplified flow chart according to some embodiments,
Fig 5, 6
   7, 8, 9,
   10, 11, 12 each schematically depicts a simplified flow chart according to some embodiments,

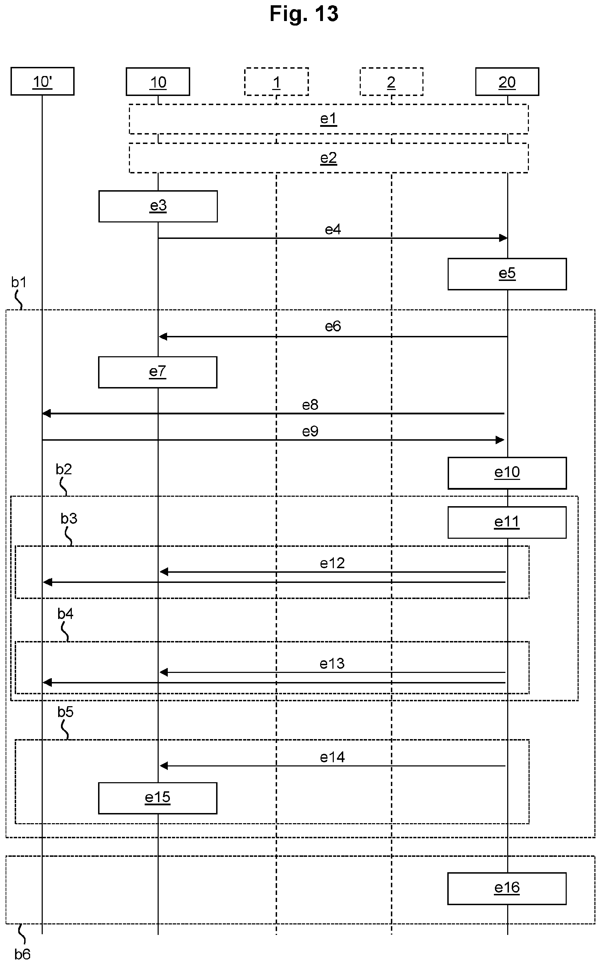

Fig. 13 schematically depicts a signaling chart according to some embodiments, and
Fig. 14,
   15, 16, 17
   each schematically depicts a simplified signaling chart according to some embodiments,
Fig. 18A,
18B each schematically depicts a simplified block diagram according to some embodiments,

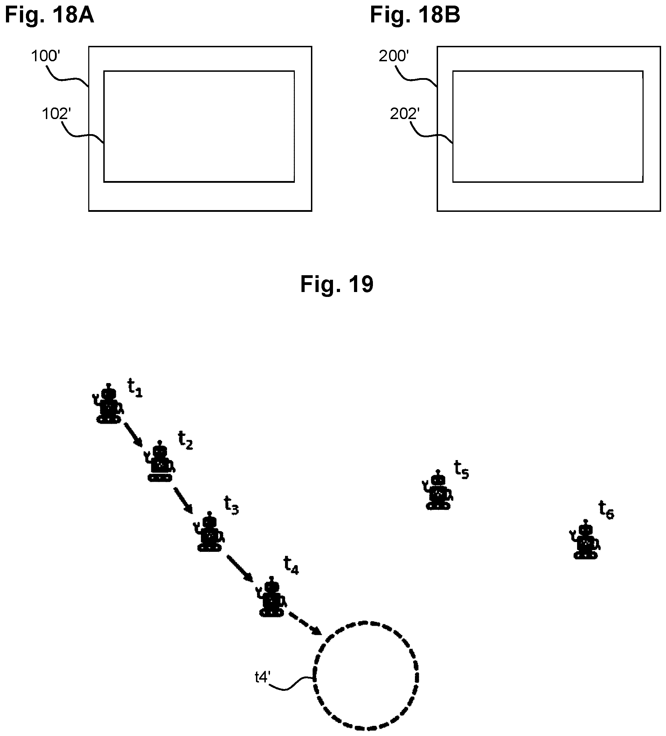

Fig. 19 schematically depicts aspects of a trajectory mismatch according to some embodiments.

### Description of the embodiments

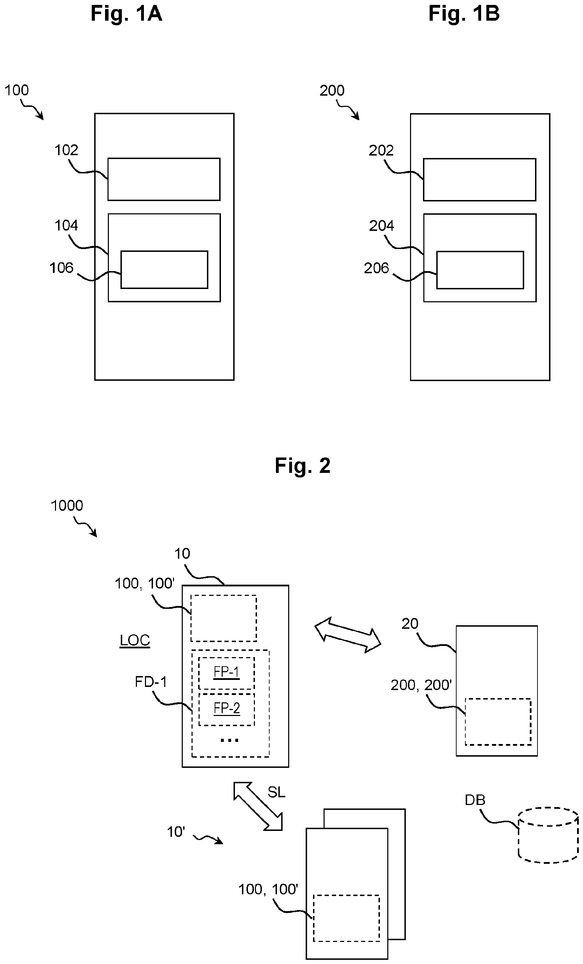

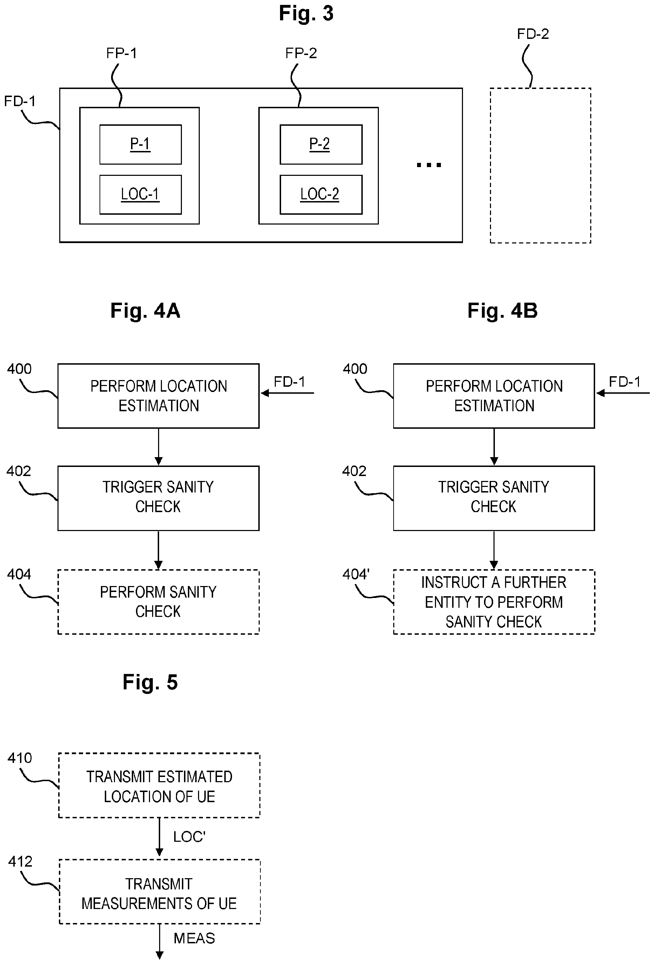

Some embodiments exemplarily depicted by Fig. 1A relate to an apparatus 100, comprising at least one processor 102, and at least one memory 104 storing instructions 106, the at least one memory 104 and the instructions 106 configured to, with the at least one processor 102, cause a user equipment 10 (Fig. 2), e.g. for a mobile communications network, to perform 400 (Fig. 4A) a location estimation of a location LOC (Fig. 2) of the user equipment 10 based on a first fingerprint dictionary FD-1 comprising a plurality of fingerprints FP-1, FP-2, ..., each of the plurality of fingerprints FP-1, FP-2, ... characterizing a location and one or more physical parameters associated with the location, and to trigger 402 (Fig. 4A) a sanity check for validating the location estimation based on the first fingerprint dictionary FD-1. The validation of the location estimation e.g. enables to asses a quality and/or correctness of the location estimation based on the first fingerprint dictionary FD-1. Optionally, in step 404, the sanity check may be performed. In some embodiments, the sanity check 404 may e.g. be performed by the UE 10.

According to some embodiments, the physical parameters may e.g. comprise at least one measured signal and/or sensor values or the like, such as radio frequency, RF, signals, magnetic field readings, ultrasound signals.

Fig. 3 exemplarily depicts a fingerprint dictionary FD-1 comprising a plurality of fingerprints FP-1, FP-2, ..., wherein the first fingerprint FP-1 comprises first physical parameters P-1 and a location LOC-1 associated with the first physical parameters P-1, and wherein the second fingerprint FP-2 comprises second physical parameters P-2 and a location LOC-2 associated with the second physical parameters P-12. According to some embodiments, the fingerprint dictionary FD-1 may comprise more than the two exemplarily depicted fingerprints FP-1, FP-2. Also, according to further embodiments, more than one fingerprint dictionary FD-1 may be provided, cf. the exemplarily depicted second fingerprint dictionary FD-2, which may e.g. have a same or similar structure as the first fingerprint dictionary FD-1. In some embodiments, the first fingerprint dictionary FD-1 may be associated with a first scenario (e.g., time of day), while the second fingerprint dictionary FD-2 may be associated with a second scenario (e.g., time of day) which is different from the first scenario.

According to some embodiments, different environmental conditions/scenarios requiring different fingerprint dictionaries may be defined and/or classified. Further embodiments may comprise selecting and/or using an appropriate previously recorded fingerprint dictionary, e.g. corresponding to a latest scenario that may occur or occurs in an area of interest or may comprise triggering creation of a new fingerprinting dictionary when needed.

According to some embodiments, multiple fingerprint dictionaries FD-1, FD-2 may be stored, e.g. in an optional database DB. In some embodiments, such multiple dictionaries may correspond to different scenarios that affect a propagation environment, e.g. assumed to occur on a regular basis. Examples of such scenarios according to further embodiments are e.g. scheduled actions in an industrial environment such as arrival of transporting vehicles to leave or collect assets, arrival or leaving workers on certain time of the day etc.

In some embodiments, the abovementioned sanity check may be performed, e.g. for determining whether the location estimation obtained via the fingerprint dictionary-based approach using the current or "latest" fingerprint dictionary FD-1 e.g. is in accordance with an anticipated location as being determined by using a secondary user location tracking method.

According to some embodiments, the sanity check comprises a further location determining and/or tracking method ("secondary user location tracking method"), which is different from the location estimation based on the first fingerprint dictionary FD-1.

According to some embodiments, the further location determining and/or tracking method may e.g. comprise a trajectory estimation method, e.g. for estimating a trajectory of the UE 10, possibly using side information from either other RF or non-RF sources, e.g. inertial motion sensors, together with filtering techniques e.g. particle filtering, Kalman filtering, Markov localization.

According to some embodiments, Fig. 4A, the instructions 106, when executed by the at least one processor 102, further cause the user equipment 10 to a) perform 404 the sanity check. In other words, in some embodiments, the UE 10 may perform the sanity check 404 itself.

According to some embodiments, Fig. 4B, the instructions 106, when executed by the at least one processor 102, further cause the user equipment 10 to b) instruct 404' a further entity 20 (Fig. 2) to perform the sanity check. According to some embodiments, the further entity 20 may be associated with a location management function, LMF, or may be an entity configured to perform a location management function, e.g. for one or more UEs 10, 10'. In some embodiments, the entity 20 may be a network-side entity 20.

According to some embodiments, Fig. 5, the instructions 106, when executed by the at least one processor 102, further cause the user equipment 10 to: transmit 410 an estimated location LOC' obtained by the location estimation 400 (Fig. 4A, 4B) to the further entity 20 (Fig. 2).

According to some embodiments, Fig. 5, the instructions 106, when executed by the at least one processor 102, further cause the user equipment 10 to: transmit 412 measurements MEAS of the user equipment 10 for the sanity check to the further entity 20. In some embodiments, the transmitting 412 of the measurements MEAS may also be combined with the instructing 404'. In some embodiments, the instructing 404' may be performed implicitly, e.g. by transmitting 412 the measurements MEAS to the entity 20.

According to some embodiments, the measurements MEAS may comprise the at least one (RF) signal and/or physical parameter which may be used to determine a location of the UE 10 based on the first fingerprint dictionary FD-1.

According to some embodiments, the instructions 106, when executed by the at least one processor 102, further cause the user equipment 10 to: receive 420 a warning message WM characterizing a quality of the location estimation, e.g. from the entity 20 (e.g., if the entity 20 has, for example based on the sanity check, determined the quality of the location estimation).

According to some embodiments, the instructions 106, when executed by the at least one processor 102, further cause the user equipment 10 to: at least temporarily disregard 422 the location estimation, for example based on a or the warning message WM characterizing a quality of the location estimation and/or on an error report ER of a or the further entity 20.

According to some embodiments, the instructions 106, when executed by the at least one processor 102, further cause the user equipment 10 to: receive 424 a second fingerprint dictionary FD-2, e.g. from the entity 20 or another entity or device (not shown). In some embodiments, the second fingerprint dictionary FD-2 may be an updated variant of the first fingerprint dictionary FD-1.

According to some embodiments, the instructions 106, when executed by the at least one processor 102, further cause the user equipment 10 to: receive 426 a command CMD-1 to create a new fingerprint dictionary FD-2.

According to some embodiments, the instructions 106, when executed by the at least one processor 102, further cause the user equipment 10 to: exchange 428 via a sidelink SL (Fig. 2) to at least one further user equipment 10' first information INF-1 characterizing a potential mismatch of the location estimation.

According to some embodiments, the instructions 106, when executed by the at least one processor 102, further cause the user equipment 10 to: based on at least one of the sanity check and the first information INF-1, send a mismatch report MR, for example to the further entity 20.

According to some embodiments, the instructions 106, when executed by the at least one processor 102, further cause the user equipment 10 to: perform 430 an update of the first fingerprint dictionary FD-1 and/or at least one further fingerprint dictionary FD-2.

According to some embodiments, performing 430 an update of the first fingerprint dictionary FD-1 may comprise replacing the first fingerprint dictionary FD-1 with another fingerprint dictionary, and/or may comprise modifying the content of the first fingerprint dictionary FD-1.

According to some embodiments, the instructions 106, when executed by the at least one processor 102, further cause the user equipment 10 to: send 432 an updated fingerprint dictionary, for example to the at least one further user equipment 10' (Fig. 2), for example via the sidelink SL.

According to some embodiments, the instructions 106, when executed by the at least one processor 102, further cause the user equipment 10 to: send 434 a command CMD-2 to create a new fingerprint dictionary to the at least one further user equipment 10', for example via the sidelink SL.

According to some embodiments, the instructions 106, when executed by the at least one processor 102, further cause the user equipment 10 to: selectively use one of a plurality of fingerprint dictionaries FD-1, FD-2 (Fig. 3). This way, e.g. based on a current scenario, a suitable one of the plurality of fingerprint dictionaries FD-1, FD-2 may be used which enables to increase a precision regarding fingerprint dictionary based location estimation.

Further embodiments relate to a method, Fig. 4A, comprising: performing 400 a location estimation of a location of a user equipment 10 based on a first fingerprint dictionary FD-1 comprising a plurality of fingerprints, each of the plurality of fingerprints characterizing a location and one or more physical parameters associated with the location, and triggering 402 a sanity check for validating the location estimation based on the first fingerprint dictionary.

Further embodiments, Fig. 18A, relate to an apparatus 100' comprising means 102' for causing a user equipment 10 to perform 400 a location estimation of a location of the user equipment 10 based on a first fingerprint dictionary comprising a plurality of fingerprints, each of the plurality of fingerprints characterizing a location and one or more physical parameters associated with the location, and to trigger 402 a sanity check for validating the location estimation based on the first fingerprint dictionary. In some embodiments, the means 102' may e.g. comprise at least one processor 102 (Fig. 1A), and at least one memory 104 storing instructions 106, wherein e.g. the at least one memory 104 and the instructions 106 are configured to, with the at least one processor 102, to perform aspects and/or steps of the method according to the embodiments.

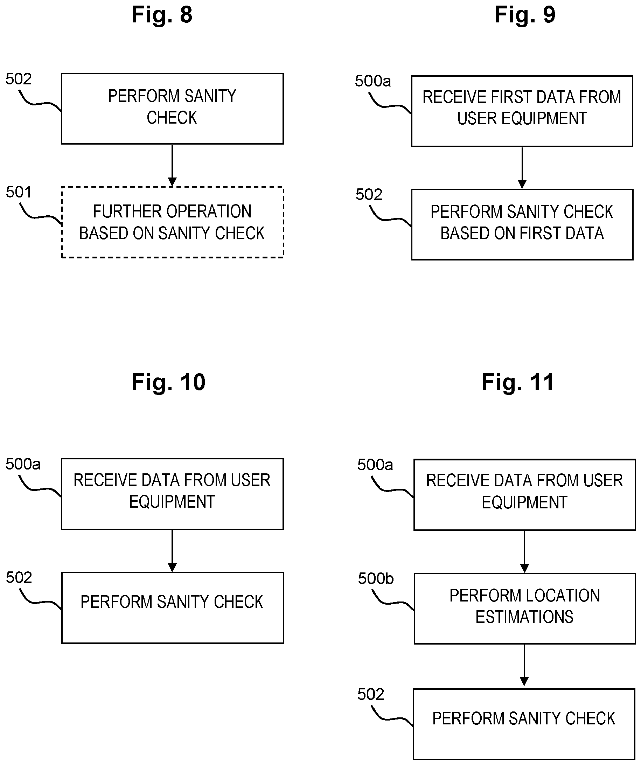

Further embodiments, Fig. 1B and Fig. 8, relate to an apparatus 200, comprising at least one processor 202, and at least one memory 204 storing instructions 206, the at least one memory 204 and the instructions 206 configured to, with the at least one processor 202, cause an entity 20 (Fig. 2), which is for example associated with a location management function, LMF, to: perform 502 a sanity check for validating a location estimation of a location of a user equipment 10 based on a first fingerprint dictionary FD-1 comprising a plurality of fingerprints, each of the plurality of fingerprints characterizing a location and one or more physical parameters associated with the location.

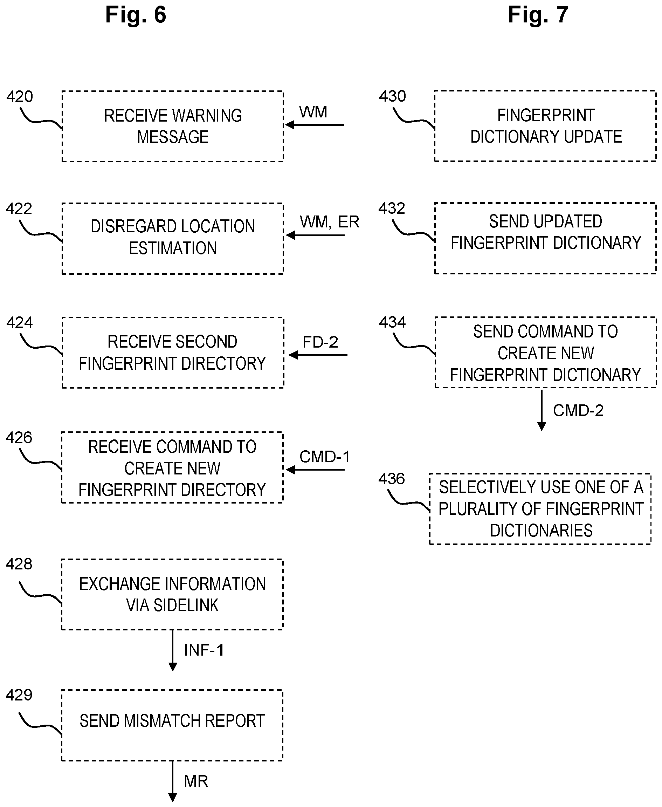

According to some embodiments, a further operation 501 of the entity 20 may optionally be performed based on the sanity check 502. As an example, depending on the sanity check, an update of the fingerprint dictionary FD-1 for which the sanity check has been conducted may be performed or initiated, and/or a warning message WM (Fig. 6) may be sent to one or more UEs 10, 10'.

According to some embodiments, performing an update of the currently used, e.g. first, fingerprint dictionary may comprise replacing the currently used, e.g. first, fingerprint dictionary with another (e.g., currently not used) fingerprint dictionary, and/or may comprise modifying the content of the currently used, e.g. first, fingerprint dictionary FD-1.

According to some embodiments, Fig. 9, the instructions 206, when executed by the at least one processor 202, further cause the entity 20 to receive 500a first data from the user equipment 10, and to perform 502 the sanity check based on the first data, wherein the first data comprise at least one of: a) a location estimation of the user equipment 10, b) measurements MEAS of the user equipment 10 for the sanity check 502.

In some embodiments, Fig. 10, the entity 20 receives 500a data from UE 10, the data comprising the location estimation of the user equipment 10 and the measurements MEAS of the user equipment 10 for the sanity check 502, and performs 502 the sanity check 502 based thereon.

According to some embodiments, Fig. 11, the instructions 206, when executed by the at least one processor 202, further cause the entity 20 to perform 500b (e.g., after receiving data from the UE 10, cf. step 500a, a location estimation of a location of the user equipment 10 based on a fingerprint dictionary comprising a plurality of fingerprints, each of the plurality of fingerprints characterizing a location and one or more physical parameters associated with the location, and a further location determining and/or tracking method, which is different from the location estimation based on the first fingerprint dictionary. Based on the location estimations of step 500b, in some embodiments, the entity 20 may perform 502 the sanity check 502.

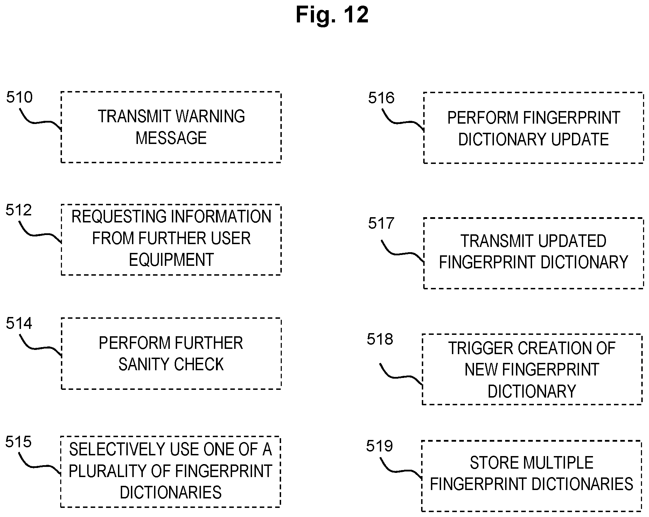

According to some embodiments, Fig. 12, the instructions 206, when executed by the at least one processor 202, further cause the entity 20 to perform at least one of: a) transmitting 510 a warning message WM (Fig. 6) characterizing a quality of the location estimation to the user equipment 10, b) requesting 512 from at least one further user equipment 10' nearby (e.g., within a predetermined maximum range from the user equipment 10) a location estimation of a location of the user equipment 10' and measurements of the at least one further user equipment 10' for a sanity check and/or receiving the requested location estimation of the location of the user equipment and the requested measurements of the at least one further user equipment, c) a further sanity check 514 based on the requested location estimation of the location of the user equipment and the requested measurements of the at least one further user equipment, d) selectively use 515 one of a plurality of fingerprint dictionaries FD-1, FD-2, e) update 516 at least the first fingerprint dictionary FD-1 based on the further sanity check 514 and/or based on a comparison of location estimations according to different methods, f) transmit 517 an updated fingerprint dictionary to at least one user equipment 10, 10', g) trigger 518 a creation of at least one new fingerprint dictionary, h) store 519 multiple fingerprint dictionaries, wherein for example each of the multiple fingerprint dictionaries corresponds to a different scenario.

According to some embodiments, updating 516 at least the first fingerprint dictionary FD-1 may comprise replacing the first fingerprint dictionary FD-1 with another (e.g., currently not used) fingerprint dictionary, and/or may comprise modifying the content of the first fingerprint dictionary FD-1.

Further embodiments, Fig. 8, relate to a method comprising: performing 502 a sanity check for validating a location estimation of a location of a user equipment 10 based on a first fingerprint dictionary FD-1 comprising a plurality of fingerprints, each of the plurality of fingerprints characterizing a location and one or more physical parameters associated with the location.

Further embodiments, Fig. 18B, relate to an apparatus 200' comprising means 202' for causing an entity 20 to perform 502 a sanity check for validating a location estimation of a location of a user equipment 10 based on a first fingerprint dictionary FD-1 comprising a plurality of fingerprints, each of the plurality of fingerprints characterizing a location and one or more physical parameters associated with the location.

In some embodiments, the means 202' may e.g. comprise at least one processor 202 (Fig. 1B), and at least one memory 204 storing instructions 206, wherein e.g. the at least one memory 204 and the instructions 206 are configured to, with the at least one processor 202, to perform aspects and/or steps of the method according to the embodiments.

Some embodiments relate to a communications system 1000 (Fig. 2) comprising at least one apparatus 100, 100', 200, 200' according to the embodiments and, optionally, at least one UE 10, 10', and, optionally, at least one, e.g. LMF, entity 20.

In some embodiments, the at least one further UE 10' may also comprise an apparatus 100, 100' according to the embodiments.

Some embodiments relate to a use of the apparatus according to the embodiments and/or of the method according to the embodiments and/or of the system according to the embodiments for at least one of: a) validating the location estimation based on the first fingerprint dictionary, b) improving a precision of location estimation based on fingerprint dictionaries, c) selectively using one of a plurality of, for example, different fingerprint dictionaries.

Fig. 13 schematically depicts a signalling diagram according to further embodiments. Element 10 symbolizes the UE 10, also cf. Fig. 2, element 10' symbolizes the at least one further UE, element 20 symbolizes the (e.g., LMF) entity 20. Element 1 symbolizes an optional radio access network, RAN, e.g. next generation RAN, NG-RAN, and element 2 symbolizes an optional access and mobility management function, AMF.

Block e1 symbolizes an optional position protocol capability transfer, e.g. LTE (long term evolution) position protocol capability transfer (LPP). Block e2 symbolizes an optional LPP assistance data delivery e.g. characterizing a collection of fingerprint dictionaries and/or an update of the UE 10 of a current fingerprint dictionary.

Block e3 of Fig. 13 symbolizes a location estimation of the UE 10 based on a current fingerprint dictionary, e.g. the first fingerprint dictionary FD-1.

In some embodiments, the UE 10 stores one fingerprint dictionary, presently the first fingerprint dictionary FD-1, at a time while the LMF entity 20 may store more than one, e.g. all, fingerprint dictionaries belonging to an area of interest. Hence, in some embodiments, the UE 10 does not need a huge storage to store all the fingerprint dictionaries. According to the exemplary embodiments of Fig. 13, the UE 10 makes the location estimation e3 using fingerprinting, but does not make the secondary position estimation.

Block e4 symbolizes a transmission of the location estimation of the UE 10 and of measurements MEAS (e.g., similar to block 412 of Fig. 5) for a secondary positioning approach, which may e.g. be used by the LMF 20 for the sanity check according to the embodiments, from the UE 10 to the LMF 20.

In some embodiments, the UE 10 obtains its location via fingerprinting, block e3, by correlating its measurement on the fingerprint entity (e.g. RSS from several access points/base stations (not shown)) to the current (i.e., the most recent or first) fingerprint dictionary FD-1. The UE-based (and e.g., not the network-based) estimation e3 of location is considered, in some embodiments, to account for low-latency applications, as may be used in industrial use cases.

In some embodiments, the UE 10 periodically sends its fingerprinting-based location estimation (block e3) to the network or LMF entity 20 (block e4) together with its measurements and/or other positioning-related information to be used for the secondary positioning approach. The LMF entity 20 carries out a sanity check, block e5, e.g. by anticipating the UE location using the secondary positioning method and detects a match or mismatch.

In other words, block e5 symbolizes a sanity check performed by the LMF 20 based on the location estimation and the measurements MEAS for a secondary positioning approach (e.g., further location determining and/or tracking method). In some embodiments, the sanity check e5 may comprise a correlation of the fingerprint-based location estimation and the results of the secondary positioning approach.

In some embodiments, in case of a mismatch of the sanity check e5, see block b5 of Fig. 13, the LMF entity 20 sends a (pre-warning or) warning message e6 to the UE 10 and requests, see step e8, from further, e.g. nearby UEs 10', their fingerprinting positioning estimates together with measurements to be used for the secondary positioning approach.

In some embodiments, e.g. until the UE 10 receives further information from the entity 20, the UE 10 may treat the location information obtained based on fingerprinting as not reliable, see block e7.

In some embodiments, the entity 20 performs a further sanity check e10 based on the report/measurements e9 from the nearby UEs 10'.

In some embodiments, the entity 20 confirms whether the detected mismatch (by or based on the measurement of the first UE 10) is valid, depending on the report/measurements e9 from the nearby UEs 10', see block b1.

As an example, if the mismatch is confirmed by the entity 20 for the nearby UEs 10' as well, the entity 20 scans the fingerprint dictionaries (which may e.g. be stored locally with respect to the entity 20), to find the fingerprint dictionary correcting the mismatch, which corresponds with a fingerprint dictionary update process e11.

In some embodiments, if such a dictionary (e.g., reducing or correcting the mismatch) is found, see block b3, it is declared as the current dictionary (i.e., the entity 20 updates, block e11, the current dictionary) and sent (arrow e12) to nearby UEs 10' by the entity 20. Otherwise, if such a dictionary is not found, see block b4, the entity 20 triggers creation of a new dictionary, see arrow e13. In some embodiments, at least one fingerprint creation technique known in the field may be used, e.g. by the UE 10.

In some embodiments, if the mismatch is not confirmed by the entity 20 for nearby UEs 10', see block b5: The entity 20 reports to the UE 10 who experienced the mismatch, that the mismatch is not confirmed by the entity 20 for nearby UEs 10', see arrow e14. In some embodiments, the UE 10, see block e15, either discards the one-time mismatch, or checks hardware/measurement issues specific to the UE 10 if the mismatch is ongoing/happening again.

In some embodiments, in case of no mismatch, see block b6: The fingerprint location estimation e3 of the UE 10 is considered as reliable, e.g. by the entity 20, see block e16, and no additional action is taken by the entity 20.

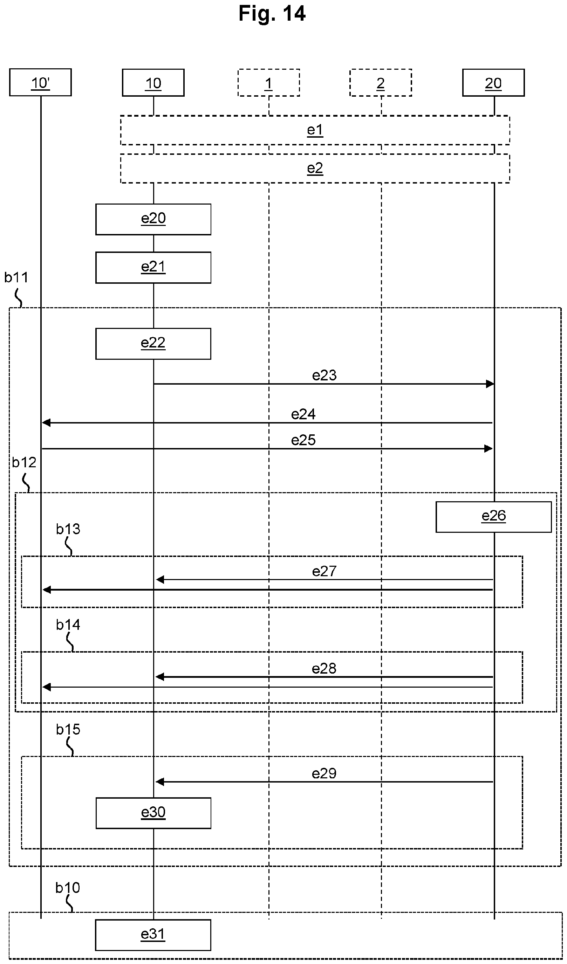

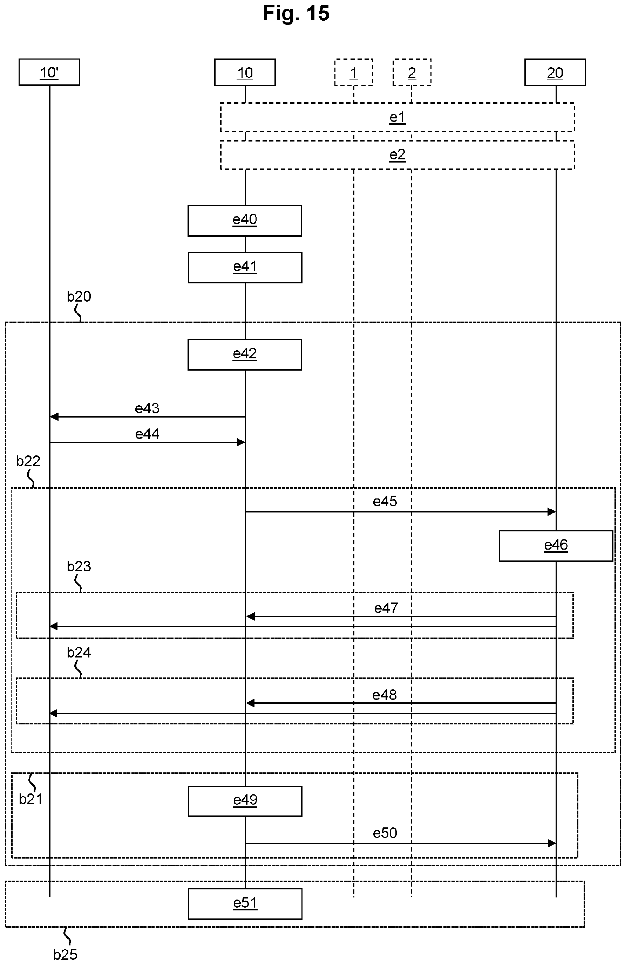

Fig. 14, 15 schematically depict signalling diagrams according to further embodiments. In some embodiments, the blocks 1, 2, 10, 10', 20, e1, e2 of Fig. 14, 15 correspond to the blocks 1, 2, 10, 10', 20, e1, e2 of Fig. 13 as explained above.

In some embodiments, the UE 10 (Fig. 14) performs a location estimation based on fingerprinting, e.g. using a currently stored (e.g. first) fingerprint dictionary FD-1 (Fig. 2). In some embodiments, the UE 10 may store one fingerprint dictionary FD-1 at a time, whereas the entity 20 may store a plurality of fingerprint dictionaries, e.g. associated with an area of interest, e.g. potential positions the UE 10 and/or the further UE 10' may at least temporarily be located at.

Block e20 of Fig. 14 symbolizes a location estimation of the UE 10 based on a current fingerprint dictionary, e.g. the first fingerprint dictionary FD-1, e.g. similar to block e3 of Fig. 13. In different to Fig. 13, however, according to the embodiments of Fig. 14, the UE 10 performs the sanity check e21 itself, e.g. using a further (e.g., secondary, with respect to the fingerprint dictionary based technique) positioning and/or location determining and/or tracking method.

In some embodiments, if, based on the sanity check e21, no mismatch is detected at the UE, which e.g. means that the UE's positions as determined based on the fingerprint dictionary FD-1 and as determined by the further positioning and/or location determining and/or tracking method do not deviate significantly from each other, the location estimation is considered to be reliable, see blocks b10, e31 of Fig. 14.

In some embodiments, in case of a mismatch, however, see block b11, the UE 10 disregards, see block e22, its fingerprint location estimations. Further, in some embodiments, the UE reports the mismatch to the entity 20, see arrow e23.

In some embodiments, the entity 20 checks whether a potential environmental change the detected mismatch b11 may be based on may also affect the other UEs 10' in the area. In some embodiments, the entity 20 may thus request from the nearby UEs 10', see arrow e24, to report their match/mismatch information. Arrow e25 symbolizes these report(s) by the further UEs 10'.

In some embodiments, the blocks b12, b13, b14, b15 of Fig. 14 correspond with the above explained blocks b2, b3, b4, b5 of Fig. 13. Similarly, in some embodiments, the elements e26, e27, e28, e29, e30 of Fig. 14 correspond with the elements e11, e12, e13, e14, 15 of Fig. 13.

Fig. 15 schematically depicts a signalling diagram according to further embodiments. Similar to blocks e20, e21 of Fig. 14, in some embodiments related to Fig. 15, see the blocks e40, e41, the UE 10 performs a fingerprint dictionary-based location estimation, block e40, and a related sanity check e41. Further similar to block e22 of Fig. 14, in some embodiments, if a mismatch is detected by the UE 10, see block b20, based on the sanity check e41, the UE 10 may disregard its fingerprint location estimations, see block e42 of Fig. 15.

In some embodiments, the UE 10 uses a sidelink SL (Fig. 2) to communicate e43, e44 with nearby UEs 10', so as to collaboratively check whether the potential changes related to the mismatch affect other UEs 10' in the area. If the mismatch is not confirmed by the nearby UEs 10', see block b21, the UE 10 does not rely on its location estimation, see block e49, and sends an individual error report e50 to the entity 20. Otherwise, if the mismatch is confirmed by the nearby UEs 10', see block b22, the UE 10 sends a collaborative confirmation report e45 to the entity 20, the collaborative confirmation report e45 e.g. indicating that both the UE 10 and at least one of the further UEs 10' have determined a mismatch. In some embodiments, then, the entity 20 carries out a fingerprint dictionary update process e46.

In some embodiments, the blocks b23, b24 of Fig. 15 correspond with the above explained blocks b3, b4 of Fig. 13. Similarly, in some embodiments, the elements e47, e48 of Fig. 15 correspond with the elements e12, e13 of Fig. 13.

In some embodiments, if no mismatch is detected, see block b25 of Fig. 15, the UE 10 considers its fingerprint dictionary-based location estimation as reliable, see block e51.

In some embodiments, as long as there is no mismatch detected, see e.g. blocks b6, b10, b25 (i.e., there is probably no (or no significant) propagation environment change), the UE location estimation may be considered valid without requiring additional action, leading, in some embodiments, to low latency.

On the other hand, in some embodiments, after a mismatch has been detected and confirmed by nearby UEs, a fast solution of simply scanning and switching among several stored fingerprint dictionaries FD-1, FD-2 (Fig. 3) may be applied, which in some embodiments reduces or even minimizes the additional latency to handle, e.g. solve, the mismatch problem caused by a propagation environment change.

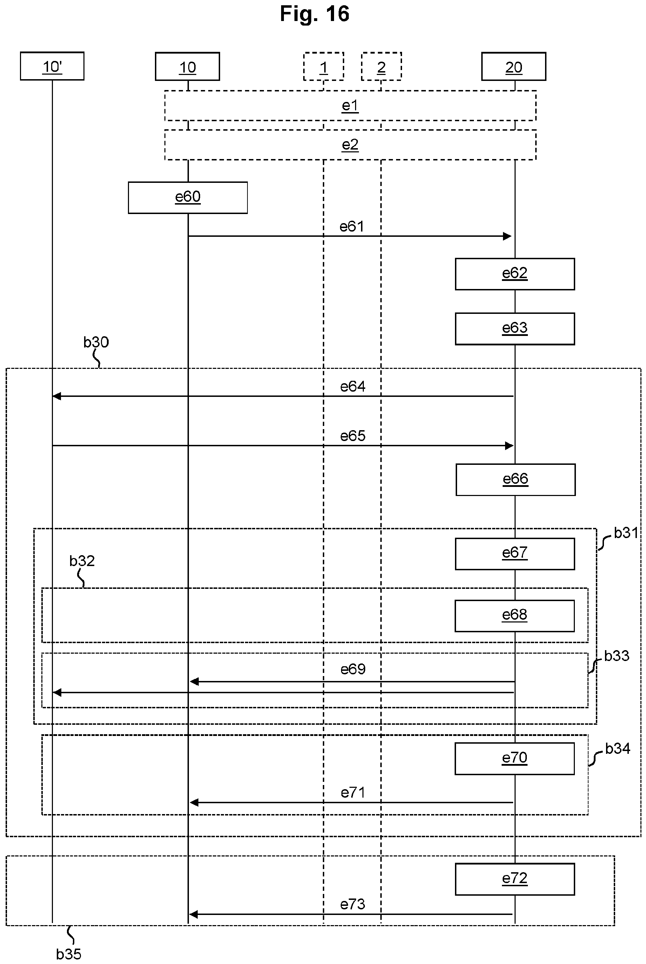

Fig. 16 schematically depicts a signalling diagram according to further embodiments. In some embodiments, the blocks 1, 2, 10, 10', 20, e1, e2 of Fig. 16 correspond to the blocks 1, 2, 10, 10', 20, e1, e2 of Fig. 13 as explained above.

In some embodiments based on Fig. 16, the UE 10 only takes measurements e60 for applying a fingerprinting method (e.g., the fingerprint dictionary-based location estimation) and for the secondary positioning method, but does not make a location estimation, and does not store a fingerprint dictionary. Rather, presently, the entity 20 stores several fingerprint dictionaries FD-1, FD-2 (Fig. 3) belonging to an area of interest and makes the location estimation e62. As an example, the UE 10 takes both the fingerprinting and the secondary positioning method measurements, e60, and sends them, see arrow e61, to the entity 20.

The entity obtains, e62, the UE location via fingerprinting, by correlating the measurement e61 sent by the UE 10 on the fingerprint entity (e.g., RSS from several access points/base stations (not shown)) to the current fingerprint dictionary. Then, see block e63, the entity 20 makes the sanity check, e.g. by using the secondary determining and/or tracking method.

In some embodiments, in case of a mismatch, see block b30 of Fig. 16, the entity 20 requests information from nearby UEs 10', see arrow e64, to send, see arrow e65, their fingerprinting and the secondary approach measurements (e.g., not the estimates since, for the present embodiments, it is assumed that the UEs 10, 10' do not have the capability to make a location estimation themselves), and makes sanity check e66 for the nearby UEs 10'.

In some embodiments, if the mismatch is confirmed by the entity 20 for the nearby UEs 10' as well, see block b31, although the entity 20 may not be aware of the exact location of the nearby UEs 10', the nearby UEs 10' usually receive signals from a similar subset of access/transmission points (not shown) or measure approximate fingerprint values, hence they may be easily identified in some embodiments.

In some embodiments, the entity 20 concludes that the propagation environment has changed and starts a fingerprint dictionary update process e67, e.g. by searching for a recorded fingerprint dictionary FD-2 (Fig. 3) correcting the mismatch ("fingerprint dictionary update process").

In some embodiments, if such a recorded fingerprint dictionary is found, block b32, the entity 20 updates, see block e68, the current fingerprint dictionary and starts using the updated current fingerprint dictionary, e.g. until a new mismatch occurs.

In some embodiments, otherwise, the entity 20 triggers creation of a new dictionary, see block b33 and arrow e69, which may e.g. be done using a technique known in the field.

In some embodiments, if a mismatch is not confirmed by the entity 20 for the nearby UEs 10', see block b34, the entity 20 concludes, see block e70, that the measurements sent by the UE 10 (see arrow 61) are erroneous and warns the UE 10 by sending an individual error report e71.

In some embodiments, if no mismatch is detected by the entity 20, see block b35, the entity 20 may conclude, see block e72, that the estimated location is reliable and may send the estimated location to the UE 10, see arrow e73.

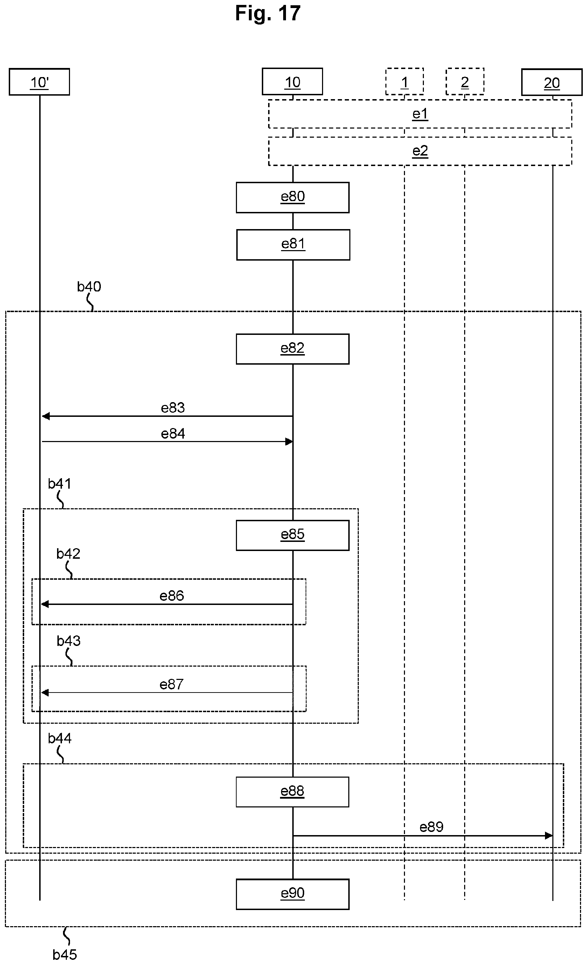

Fig. 17 schematically depicts a signalling diagram according to further embodiments. In some embodiments, the blocks 1, 2, 10, 10', 20, e1, e2 of Fig. 17 correspond to the blocks 1, 2, 10, 10', 20, e1, e2 of Fig. 13 as explained above.

In some embodiments based on Fig. 17, it is assumed that the UE 10 has a lot of capabilities such that it can e.g. store several, e.g. all, recorded fingerprint dictionaries FD-1, FD-2 , make a location estimation e80 using fingerprinting and make the sanity check e81 with a secondary location estimation using a secondary positioning method, and update e85 the current fingerprint dictionary if needed.

In some embodiments based on Fig. 17, the UE 10 makes the location estimation e80 using the current fingerprint dictionary and, also, using the secondary positioning method. Further, the UE 10 makes the sanity check e81, e.g. by correlating the fingerprint estimation with the secondary positioning method.

In some embodiments, if a mismatch detected at the UE 10, see block b40, the UE 10 may disregard the fingerprint dictionary-based location estimation, see block e82, and may form a sidelink e83, e84 (also see Fig. 2, reference sign SL) with nearby UEs 10' and requests e83 mismatch information, which is received by the UE, see arrow e84.

In some embodiments, if the mismatch is confirmed by the nearby UEs 10', see block b41, the UE 10 starts a fingerprint dictionary update process, see block e85, e.g. searching for a recorded fingerprint dictionary correcting the mismatch.

In some embodiments, if such a dictionary is found, see block b42, it is declared as the current fingerprint dictionary and sent to the nearby UEs 10' by the UE 10, see arrow e86. Otherwise, if such a dictionary is not found, the UE 10 triggers creation of a new dictionary, see arrow e87.

In some embodiments, if the mismatch is not confirmed by the nearby UEs 10', see block b44, the UE 10 does not rely, e88, on its positioning estimates, and may optionally send an (e.g., individual) error report e89 to the entity 20.

In some embodiments, if a mismatch is not detected at the UE 10, see block b45, the location estimation e80 is concluded to be reliable, see block e90.

In the following, examples related to storing and/or utilizing fingerprint dictionaries according to some embodiments are explained.

In some embodiments, the at least one fingerprint dictionary FD-1 (Fig. 1A, 2, 3) is stored e.g. in form of and/or as a look-up table as follows: **FD = {(RSS₁, P₁), (RSS₂, P₂), (RSS₃, P₃), ..., (RSS_{N}, P_{N})}** where **RSSⱼ = (rssⱼ₁, rssⱼ₂, rssⱼ₃, rssⱼ₄, ..., rss_{jL})** and **Pⱼ** = **(Xⱼ,yⱼ, Zⱼ). Pⱼ** is a position vector representing the coordinates (or the coordinate intervals) of a **j^{th}** reference point, and **RSSⱼ** represents the corresponding (**j^{th}**) RSS (received signal strength) vector of **L** elements, composed of the RSS values (or the RSS value intervals), **rssⱼₗ,** from **L** access points. As an example, there may be **N** reference points and **L** access points.

In some embodiments, RSS measurements and the corresponding locations may be used to train an, for example artificial, neural network (ANN), and at least one fingerprint dictionary FD-1 may be characterized by and/or stored as ANN parameters (e.g., weights and/or biases) of the trained neural network.

In some embodiments, RSS measurements and the corresponding locations can be represented as a fitting mathematical function/analytical expression, and that mathematical expression (e.g. composed of any functions such as a polynomial fit to some degree) is stored as fingerprint dictionary.

In some embodiments, multiple, for example different, fingerprint dictionaries (e.g., characterized by multiple look-up tables, multiple mathematical expressions or multiple ANN weight-bias sets) may be provided, each of which corresponds to a different environmental condition/scenario.

In some embodiments, it is proposed to have multiple fingerprint dictionaries FD-1, FD-2 (Fig. 3) corresponding to different scenarios, whose number can e.g. be increased or decreased, e.g. depending on some conditions set.

In some embodiments, one specific fingerprint dictionary is used at a time to perform positioning, e.g. location estimation, e.g. in a certain area, while one or more other (e.g. already recorded) fingerprint dictionaries may be stored, e.g. in a database of e.g. the entity 20. In some embodiments, if there is a change happening in the environment affecting the positioning performance, a degradation or break down in the positioning accuracy may be expected.
In some embodiments, a degradation can be detected by a mismatch of location estimations made by at least two approaches using different information sources, one of which is fingerprint dictionary-based. The other approach can, in one embodiment, be a trajectory estimation using e.g. inertial motion sensors possibly together with a filtering approach such as Kalman filtering, Markov localization or particle filtering. In some embodiments, a mismatch of (at least) two location estimation approaches implies that one is incompatible/discrepant with the other one, that is both may not be correct at the same time.

Fig. 19 schematically depicts an illustration of a trajectory mismatch according to some embodiments. In some embodiments, the robot positions t1, t2, t3, t4 represent compatible location estimations for fingerprint directory-based and trajectory estimation using e.g. motion sensors, whereas the robot locations t5, t6 show a discrepancy (e.g., an intolerable deviation according to some embodiments) between the fingerprint dictionary-based location estimation and the anticipated location t4' using trajectory estimation together with e.g. a motion model (e.g., symbolized by the arrows between the positions t1, t2, t3, t4, t4').

In some embodiments, two (or more) fingerprint dictionary-based approaches using different entities (e.g., one uses RF fingerprinting while the other using magnetic fingerprinting) may be selected as the two positioning approaches.

In some other embodiments, one of the two positioning approaches can be fingerprint dictionary-based while the other one can be based on other sensor readings such as e.g. at least one of ultrasonic, infrared, camera or light sensors or an RFID tag.

In some embodiments, when there is a mismatch detected for a UE 10 (e.g., after filtering out random-like fast fading which does not need any fingerprint dictionary change according to some embodiments), a process may be run that confirms whether the change on the fingerprinting approach at the UE 10 (Fig. 2) of interest also affects other UEs 10', e.g. in the proximity of the UE 10. In some embodiments, either the entity 20 (see e.g. arrow e8 of Fig. 13) or the UE 10 through a sidelink SL (see e.g. arrow e43 of Fig. 15) requests information from UEs 10' in the proximity to understand whether a change is an environmental change affecting also the nearby UEs 10' or it results from an individual UE problem of the UE 10.

In some embodiments, a mismatch confirmation process with nearby UEs 10' may involve a set of actions that may e.g. pertain to confirming whether a mismatch that is first identified for the UE 10 of interest also applies to nearby UEs 10'. In this regard, the nearby UEs 10' are requested to provide measurements MEAS taken for fingerprinting as well as a secondary positioning approach, which may then be provided to the device performing the location estimation (e.g., the entity 20, see Fig. 13, and/or the UE 10, see Fig. 17).

In some embodiments, the respective device 10, 20 may then perform a sanity check and may decide whether the issue identified for the UE 10 of interest is also affecting the nearby UEs 10'. In some embodiments, based on this decision, it may be decided whether to declare a fingerprint mismatch or that the problem was only relevant to the UE 10 of interest.

In some embodiments, all UEs 10, 10' may perform positioning, e.g. as long as not requested by the entity 20.

In some embodiments, in case the mismatch detection is carried out at the entity 20 (see e.g. Fig. 13), the locations of nearby UEs 10' (to the UE 10 whose location estimation may be detected as erroneous) which may have an active positioning session are known, since according to further embodiments even if nearby UEs 10' estimate their location using a UE-based fingerprinting method they may either periodically update the entity 20 about their location or periodically send measurements for positioning to the entity 20 (e.g., in the same way as the UE of interest).

In some embodiments, in case the mismatch detection is carried out at the UE 10 (see e.g. Fig. 14), the entity 20 may not have location updates of nearby UEs 10'. Nevertheless, in some embodiments, the nearby UEs 10' can be distinguished using the information such as nearby UEs usually receives signals from a similar subset of access/transmission points (not shown) or measures approximate fingerprint values. Note that according to some embodiments, the UEs receiving any signal above a noise threshold from a same/similar set of access/transmission points (not shown) may be inferred as "nearby UEs".
In some embodiments, e.g. in case of Fig. 15, the UE 10 may communicate with nearby UEs 10' through a sidelink SL (Fig. 2) .

In some embodiments, a detection of nearby UEs 10' can be done in a relatively robust manner since a change in environmental characteristics usually do not block all the signals from all transmission/access points (not shown); in addition, in some embodiments, for a nearby UE detection the existence of received signals is of interest rather than e.g. exact RSS values.

In some embodiments, if a mismatch is confirmed for a number of nearby UEs 10' (e.g., number is left to implementation in some embodiments), that is, if mismatches in location estimation are also detected for the nearby UEs 10', then either the entity 20 or the UE 10 may confirm a need for change in a current fingerprint dictionary, or creation of a new dictionary. In some embodiments, if the mismatch is not confirmed for the nearby UEs 10' (but determined for the UE 10, e.g.), various actions can be taken in different embodiments.

In one embodiment, the mismatch event can be stored in an optional database DB (Fig. 2), e.g. for a certain time, e.g. for future comparisons, e.g. to understand whether there is a problem with a specific trajectory (Fig. 19) on which the mismatch is recorded or with the hardware/measurement issues of the UE 10 subject to the mismatch.
In another embodiment, e.g. possibly for simpler systems, an unconfirmed mismatch can simply be discarded.

In some embodiments, after confirmation of a mismatch, the entity 20 (see e.g., Fig. 13) or the UE (see e.g. Fig. 17) scans the recorded fingerprint dictionaries to detect whether there is an already existing fingerprint dictionary which reduces or corrects the detected mismatch, e.g., has a location estimation that does not result in any mismatch. In some embodiments, such a finding may imply that a fingerprint dictionary corresponding to the new environmental conditions is already recorded before and readily stored, e.g. in the optional database DB (Fig. 2) to be used/reused. As a result, in some embodiments, the entity 20 (see e.g. Fig. 13) or the UE 10 (see e.g. Fig. 17) may switch the fingerprint dictionary correcting the mismatch and may start using it as the current dictionary, e.g. until a new confirmed mismatch is detected. In some embodiments, otherwise, if such a fingerprint dictionary is not found, the entity 20 may request creation of a new fingerprint dictionary for the unrecorded environmental change.

In some embodiments, in case of a detected mismatch, e.g. until the UE 10 receives further updates as of which new dictionary is to be used, the UE 10 may consider the location obtained via the fingerprinting method as not reliable.
An advantage of some embodiments is a comparatively low latency. As an example, latency might cause a critical degradation in the positioning performance until e.g. an update of an existing fingerprint dictionary may be realized. Hence, in some embodiments, effectively scanning multiple already recorded/stored fingerprint dictionaries and e.g. switching between them (e.g., selectively using a specific one of the several fingerprint dictionaries) is a comparatively fast solution which may help to prevent a positioning from staying inaccurate for a longer time.

Considering that, according to some embodiments, most of the significant environmental changes may take place regularly or may even be intentionally scheduled, especially in industrial settings, some embodiments show their benefits for the majority of the scenarios/settings, e.g. when using a specific fingerprint dictionary associated with the respective scenario/setting.

According to some embodiments, another advantage may be having a smaller computational load than e.g. approaches using a periodical update of a fingerprint directory. E.g., by using the sanity check 404, 404' (Fig. 4A, 4B), it may be determined whether an update of an existing fingerprint directory FD-1 is required or whether another fingerprint directory FD-2 should be used or created.

## Claims

1. An apparatus (100), comprising at least one processor (102), and at least one memory (104) storing instructions (106), the at least one memory (104) and the instructions (106) configured to, with the at least one processor (102), cause a user equipment (10) to perform (400) a location estimation of a location (LOC) of the user equipment (10) based on a first fingerprint dictionary (FD-1) comprising a plurality of fingerprints (FP-1, FP-2, ...), each of the plurality of fingerprints (FP-1, FP-2, ...) characterizing a location and one or more physical parameters (P-1) associated with the location (LOC-1), and to trigger (402) a sanity check (404) for validating the location estimation (400) based on the first fingerprint dictionary (FD-1).

2. The apparatus (100) according to claim 1, wherein the sanity check (404) comprises a further location determining and/or tracking method, which is different from the location estimation (400) based on the first fingerprint dictionary (FD-1).

3. The apparatus (100) according to at least one of the preceding claims, wherein the instructions (106), when executed by the at least one processor (102), further cause the user equipment (10) to a) perform (404) the sanity check and/or to b) instruct (404') a further entity (20) to perform the sanity check.

4. The apparatus (100) according to claim 3, wherein the instructions (106), when executed by the at least one processor (102), further cause the user equipment (10) to: a) transmit (410) an estimated location (LOC') obtained by the location estimation (400) to the further entity (20), b) transmit (412) measurements (MEAS) and/or other positioning-related information of the user equipment (10) for the sanity check to the further entity (20).

5. The apparatus (100) according to at least one of the preceding claims, wherein the instructions (106), when executed by the at least one processor (102), further cause the user equipment (10) to: a) receive (420) a warning message (WM) characterizing a quality of the location estimation (400), b) at least temporarily disregard (422) the location estimation, for example based on a or the warning message (WM) characterizing a quality of the location estimation (400) and/or on an error report (ER) of a or the further entity (20), c) receive (424) a second fingerprint dictionary (FD-2), d) receive (426) a command (CMD-1) to create a new fingerprint dictionary.

6. The apparatus (100) according to at least one of the claims 3 to 5, wherein the instructions (106), when executed by the at least one processor (102), further cause the user equipment (10) to: a) exchange (428) via a sidelink (SL) to at least one further user equipment (10') first information (INF-1) characterizing a potential mismatch of the location estimation, b) based on at least one of the sanity check (404) and the first information (INF-1), send (429) a mismatch report (MR), for example to a or the further entity (20).

7. The apparatus (100) according to at least one of the preceding claims, wherein the instructions (106), when executed by the at least one processor (102), further cause the user equipment (10) to: a) perform (430) an update of the first fingerprint dictionary (FD-1) and/or at least one further fingerprint dictionary (FD-2), b) send (432) an updated fingerprint dictionary, for example to at least one further user equipment (10'), for example via a sidelink (SL), c) send (434) a command (CMD-2) to create a new fingerprint dictionary to at least one further user equipment (10'), for example via a sidelink (SL), d) selectively use (436) one of a plurality of fingerprint dictionaries (FD-1, FD-2).

8. A method comprising: performing (400) a location estimation of a location (LOC) of a user equipment (10) based on a first fingerprint dictionary (FD-1) comprising a plurality of fingerprints (FP-1, FP-2, ...), each of the plurality of fingerprints (FP-1, FP-2, ...) characterizing a location and one or more physical parameters (P-1) associated with the location (LOC-1), and triggering (402) a sanity check (404) for validating the location estimation (400) based on the first fingerprint dictionary (FD-1).

9. An apparatus (100') comprising means (102') for causing a user equipment (10) to perform (400) a location estimation of a location (LOC) of the user equipment (10) based on a first fingerprint dictionary (FD-1) comprising a plurality of fingerprints (FP-1, FP-2, ...), each of the plurality of fingerprints (FP-1, FP-2, ...) characterizing a location and one or more physical parameters (P-1) associated with the location (LOC-1), and to trigger (402) a sanity check (404) for validating the location estimation (400) based on the first fingerprint dictionary (FD-1).

10. An apparatus (200), comprising at least one processor (202), and at least one memory (204) storing instructions (206), the at least one memory (204) and the instructions (206) configured to, with the at least one processor (202), cause an entity (20), which is for example associated with a location management function, LMF, to: perform (502) a sanity check for validating a location estimation (400) of a location (LOC) of a user equipment (10) based on a first fingerprint dictionary (FD-1) comprising a plurality of fingerprints (FP-1, FP-2, ...), each of the plurality of fingerprints (FP-1, FP-2, ...) characterizing a location and one or more physical parameters (P-1) associated with the location.

11. The apparatus (200) according to claim 10, wherein the instructions (206), when executed by the at least one processor (202), further cause the entity (20) to receive (500a) first data (DAT-1) from the user equipment (10), and to perform (502) the sanity check based on the first data (DAT-1), wherein the first data (DAT-1) comprise at least one of: a) a location estimation (LOC') of the user equipment (10), b) measurements (MEAS) and/or other positioning-related information of the user equipment (10) for the sanity check (502).

12. The apparatus (200) according to at least one of the claims 10 to 11, wherein the instructions (206), when executed by the at least one processor (202), further cause the entity (20) to perform (500b) a location estimation of a location (LOC) of the user equipment (10) based on a fingerprint dictionary (FD-1) comprising a plurality of fingerprints (FP-1, FP-2, ...), each of the plurality of fingerprints (FP-1, FP-2, ...) characterizing a location and one or more physical parameters (P-1) associated with the location (LOC-1) and a further location determining and/or tracking method, which is different from the location estimation based on the first fingerprint dictionary (FD-1) .

13. The apparatus (200) according to at least one of the claims 10 to 12, wherein the instructions (206), when executed by the at least one processor (202), further cause the entity (20) to perform at least one of: a) transmitting (510) a warning message (WM) characterizing a quality of the location estimation to the user equipment (10), b) requesting (512) from at least one further user equipment (10') within a predetermined maximum range from the user equipment (10) a location estimation of a location of the user equipment (10) and measurements of the at least one further user equipment (10') for a sanity check (502) and/or receiving the requested location estimation of the location of the user equipment (10) and the requested measurements of the at least one further user equipment (10'), c) a further sanity check (514) based on the requested location estimation of the location of the user equipment (10) and the requested measurements of the at least one further user equipment (10'), d) selectively use (515) one of a plurality of fingerprint dictionaries (FD-1, FD-2), e) update (516) at least the first fingerprint dictionary (FD-1) based on the further sanity check (514) and/or based on a comparison of location estimations according to different methods, f) transmit (517) an updated fingerprint dictionary to at least one user equipment (10, 10'), g) trigger (518) a creation of at least one new fingerprint dictionary, h) store (519) multiple fingerprint dictionaries (FD-1, FD-2), wherein for example each of the multiple fingerprint dictionaries (FD-1, FD-2) corresponds to a different scenario.

14. A method comprising: performing (502) a sanity check for validating a location estimation (400) of a location (LOC) of a user equipment (10) based on a first fingerprint dictionary (FD-1) comprising a plurality of fingerprints (FP-1, FP-2, ...), each of the plurality of fingerprints (FP-1, FP-2, ...) characterizing a location and one or more physical parameters (P-1) associated with the location.

15. An apparatus (200') comprising means (202') for causing an entity (20) to perform a sanity check for validating a location estimation (400) of a location (LOC) of a user equipment (10) based on a first fingerprint dictionary (FD-1) comprising a plurality of fingerprints (FP-1, FP-2, ...), each of the plurality of fingerprints (FP-1, FP-2, ...) characterizing a location and one or more physical parameters (P-1) associated with the location.
